Europäisches Patentamt

European Patent Office

Office européen des brevets

(19)

(11) Veröffentlichungsnummer : **0 401 536 B1**

(12)

# EUROPÄISCHE PATENTSCHRIFT

(45) Veröffentlichungstag der Patentschrift :
**12.08.92 Patentblatt 92/33**

(51) Int. Cl.⁵ : **G01B 5/00,** G01D 5/26

(21) Anmeldenummer : **90108787.4**

(22) Anmeldetag : **10.05.90**

(54) **Massverkörperung.**

(30) Priorität : **07.06.89 DE 3918490**

(43) Veröffentlichungstag der Anmeldung :
**12.12.90 Patentblatt 90/50**

(45) Bekanntmachung des Hinweises auf die
Patenterteilung :
**12.08.92 Patentblatt 92/33**

(84) Benannte Vertragsstaaten :
**DE FR GB IT**

(56) Entgegenhaltungen :
**DE-C- 3 637 628**

(73) Patentinhaber : **Dr. Johannes Heidenhain
GmbH
Dr.-Johannes-Heidenhain-Strasse 5 Postfach
1260
W-8225 Traunreut (DE)**

(72) Erfinder : **Kraus, Heinz
Traunring 74 E
W-8225 Traunreut (DE)**

Jouve, 18, rue Saint-Denis, 75001 PARIS

**Beschreibung**

Die Erfindung betrifft eine Maßverkörperung gemäß dem Oberbegriff des Anspruches 1.

Eine derartige Maßverkörperung, bestehend aus einem Grundkörper und aus einem darauf angebrachten Teilungsträger mit einer Teilung, wird bei einer Positionsmeßeinrichtung zum Messen der Relativlage zweier zueinander beweglicher Objekte, beispielsweise zweier Maschinenteile einer Werkzeugmaschine zum Positionieren eines Werkzeugs bezüglich eines zu bearbeitenden Werkstücks eingesetzt. Zu diesem Zweck ist das eine Objekt mit der Maßverkörperung verbunden, deren Teilung von einer mit dem anderen Objekt verbundenen Abtasteinheit abgetastet wird.

Als Material für den Teilungsträger wird bevorzugt Glas verwendet, da für die Herstellung und Anwendung einer Teilung eine Glasoberfläche besonders gut geeignet ist, weil sie relativ preiswert mit hervorragenden optischen Eigenschaften hergestellt werden kann.

Bei der Verwendung eines solchen Teilungsträgers aus Glas in einer Positionsmeßeinrichtung, die an einer Werkzeugmaschine mit variabler Umgebungstemperatur Anwendung findet, besteht jedoch das Problem der unterschiedlichen thermischen Ausdehnungskoeffizienten des Maschinenteils aus Stahl und des damit verbundenen Teilungsträgers aus Glas.

Aus der DE-PS 36 37 628 ist eine Maßverkörperung bekannt, die aus einem Grundkörper und aus einem darauf angebrachten Teilungsträger mit einer Teilung besteht. Der Teilungsträger aus Glas mit dem kleineren thermischen Ausdehnungskoeffizienten wird bei Normaltemperatur auf dem Grundkörper aus Stahl mit dem größeren thermischen Ausdehnungskoeffizienten schwimmend befestigt, zusammen mit diesem auf eine vorbestimmte Temperatur erwärmt und sodann stirnseitig mit Befestigungselementen am Grundkörper starr befestigt. Da der Teilungsträger bei der Abkühlung auf die Normaltemperatur wegen der unterschiedlichen thermischen Ausdehnungskoeffizienten vom Grundkörper gestaucht wird, muß bei der Herstellung des Teilungsträgers die Teilungsperiode der Teilung so vergrößert werden, daß die richtige Teilungsperiode der Teilung im gestauchten Zustand des Teilungsträgers bei der Normaltemperatur vorliegt. Die Herstellung dieser Maßverkörperung mit dem gleichen thermischen Ausdehnungsverhalten wie das Maschinenteil, an dem es verwendet wird, ist jedoch aufwendig.

Der Erfindung liegt die Aufgabe zugrunde, eine Maßverkörperung der genannten Gattung in einfacher Weise an das thermische Ausdehnungsverhalten des Maschinenteils anzupassen, an dem sie angebracht ist.

Diese Aufgabe wird erfindungsgemäß durch die Merkmale des Anspruches 1 gelöst.

Die mit der Erfindung erzielten Vorteile bestehen insbesondere darin, daß durch die kraftschlüssige Verbindung des Teilungsträgers mit dem Grundkörper mittels einer galvanisch abgeschiedenen Zwischenschicht der Teilungsträger trotz unterschiedlicher thermischer Ausdehnungskoeffizienten die gleichen temperaturbedingten Längenänderungen wie das Maschinenteil erfährt; die Maßverkörperung besitzt somit einen resultierenden thermischen Ausdehnungskoeffizienten, der trotz unterschiedlicher Materialien mit dem thermischen Ausdehnungskoeffizienten des Maschinenteils übereinstimmt, so daß temperaturbedingte Meßungenauigkeiten vermieden werden.

Vorteilhafte Ausbildungen der Erfindung entnimmt man den Unteransprüchen.

Ausführungsbeispiele der Erfindung werden anhand der Zeichnung näher erläutert.

Es zeigen

Figur 1 eine erste Maßverkörperung im Querschnitt

Figur 2 einen Ausschnitt der ersten Maßverkörperung und

Figur 3 eine zweite Maßverkörperung im Querschnitt.

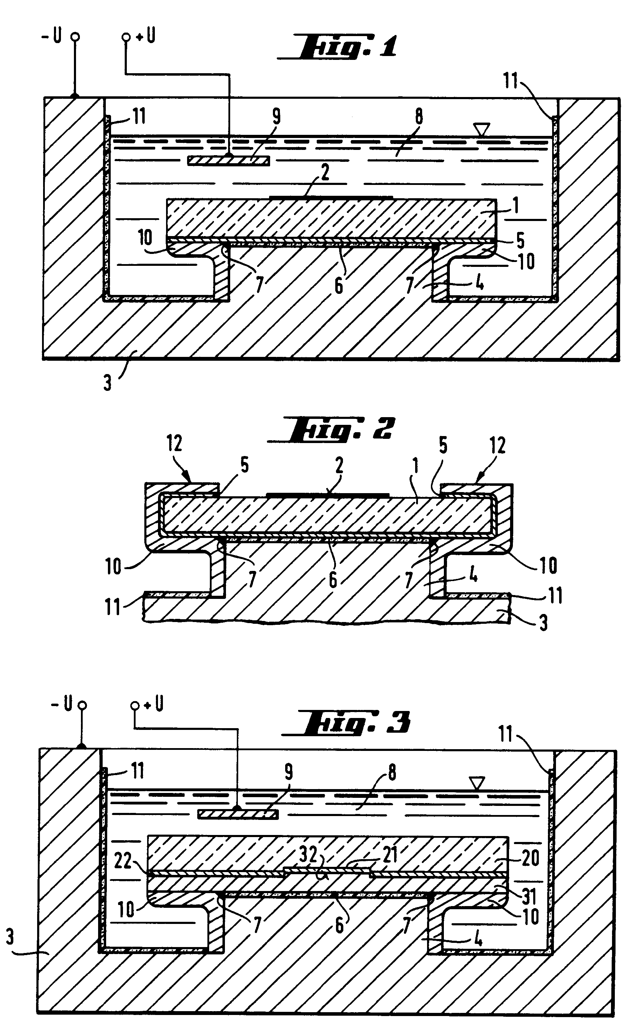

In Figur 1 ist eine erste Maßverkörperung im Querschnitt dargestellt, die aus einem Teilungsträger 1 aus Glas mit einer Teilung 2 auf seiner Oberseite und aus einem U-förmigen Grundkörper 3 mit einem Mittelsteg 4 besteht. Der Teilungsträger 1 wird an seiner der Teilung 2 abgewandten Unterseite mit einer elektrisch leitenden Elektrodenschicht 5 ganzflächig versehen, die als atomarer Haftvermittler dient; gut geeignet ist z. B. eine aufgedampfte Gold-, Silber- oder Chromschicht mit einer Dicke von ca. 100 nm. Diese Unterseite des Teilungsträgers 1 kann überdies zum Zwecke eines besseren Formschlusses aufgerauht sein; das dazu beste Verfahren ist ein Mattschliff mit anschließender Feinätzung mit verdünnter Flußsäure.

Sodann wird die mit der Elektrodenschicht 5 versehene Unterseite des Teilungsträgers 1 mittels einer Montagehilfe 6 auf der Oberseite des Mittelstegs 4 des Grundkörpers 3 fixiert; als Montagehilfe 6 sind beispielsweise ein Doppelklebeband, ein Adhäsionskleber sowie ein elastischer oder steifer Kleber geeignet. Auf diese Montagehilfe 6 kann jedoch verzichtet werden, wenn der Teilungsträger 1 z. B. mittels einer nicht gezeigten Vakuumsaugplatte plan gehalten wird.

Durchgehend längs der Stoßkanten zwischen den freien Elektrodenschichten 5 und den Seitenflächen des Mittelstegs 4 werden Leitlackbrücken 7 (Lack bzw. Kunststoff-Kleber mit Silberfüllung) aufgebracht, die eine elektrisch leitende Verbindung zwischen der Elektrodenschicht 5 und dem Grundkörper 3 bei Verwendung der elektrisch nichtleitenden Montagehilfe 6 herstellen. Die Leitlackbrücken 7 können auch als Montagehilfe dienen, indem z. B. ein silbergefüllter Epoxydkleber zur Fixierung verwendet wird.

In den an beiden Enden verschlossenen U-förmigen Grundkörper 3 wird ein Elektrolyt 8 gefüllt, der den Teilungsträger 1 überdeckt und in den eine Elektrode 9 eingetaucht wird. Der Grundkörper 3 ist mit dem negativen Pol -U und die Elektrode 9 mit dem positiven Pol +U einer nicht gezeigten Spannungsquelle verbunden. Durch Einschalten der Spannungsquelle wird eine Zwischenschicht 10 galvanisch abgeschieden, die eine kraftschlüssige Verbindung zwischen dem Teilungsträger 1 und dem Grundkörper 3 herstellt. Die Abscheidungsdicke dieser Zwischenschicht 10 bemißt sich nach dem Verhältnis der Flächenträgheitsmomente des Teilungsträgers 1 und des Grundkörpers 3 und beträgt etwa 0,2 bis 1 mm. Als Materialen für diese Zwischenschicht 10 kommen vorzugsweise Kupfer und Nickel in Frage.

Mit einer Isolierlackschicht 11 können die freien Innenflächen des U-förmigen Grundkörpers 3 vor einer unnötigen Metallabscheidung bewahrt werden. Mit einem nicht gezeigten Thermostaten kann der Elektrolyt 8 und damit der Teilungsträger 1 und der Grundkörper 3 während der galvanischen Abscheidung der Zwischenschicht 10 auf einer meßtechnisch relevanten Bezugstemperatur (z. B. 20°) gehalten werden. Man erhält somit eine kraftschlüssige Verbindung zwischen dem Teilungsträger 1 aus Glas und dem Grundkörper 3 aus Stahl über die gesamte Länge der Maßverkörperung, die homogen und bezogen auf die Bezugstemperatur spannungsfrei ist.

Deformationen, hervorgerufen durch temperaturbedingte relative Längenänderungen des Teilungsträgers 1 und des Grundkörpers 3 unterliegen ausschließlich der elastischen Verformung, sind reproduzierbar reversibel und unterliegen keinen Alterungseffekten.

Die Teilung 2 kann auch erst nach der kraftschlüssigen Verbindung des Teilungsträgers 1 mit dem Grundkörper 3 auf der Oberseite des Teilungsträgers 1 aufgebracht werden.

Wie aus Figur 1 ersichtlich, besitzt der Grundkörper 3 gegenüber dem Teilungsträger 1 ein sehr großes Flächenträgheitsmoment, so daß der resultierende thermische Ausdehnungskoeffizient der Maßverkörperung gleich dem thermischen Ausdehnungskoeffizienten des Grundkörpers 3 aus Stahl ist. Wird diese Maßverkörperung mit einem Maschinenteil aus Stahl verbunden, so treten wegen der gleichen thermischen Längenänderungen der Maßverkörperung und des Maschinenteils keine temperaturbedingten Meßungenauigkeiten auf. Anstelle eines Grundkörpers 3 aus Stahl kann auch ein Grundkörper 3 aus Aluminium mit einem größeren thermischen Ausdehnungskoeffizienten gewählt werden; in diesem Fall werden die Querschnitte des Teilungsträgers 1 aus Glas und des Grundkörpers 3 aus Aluminium so bemessen, daß der resultierende thermische Ausdehnungskoeffizient der Maßverkörperung wiederum gleich dem thermischen Ausdehnungskoeffizienten des Maschinenteils aus Stahl ist.

In Figur 2 ist ein Ausschnitt der ersten Maßverkörperung nach Figur 1 gezeigt. Die Elektrodenschicht 5 auf der Unterseite des Teilungsträgers 1 erstreckt sich über die beiden Seitenflächen bis in zwei schmale Randbereiche 12 auf der Oberseite des Teilungsträgers 1 mit der Teilung 2, so daß sich auch die galvanisch abgeschiedene Zwischenschicht 10 bis in die beiden schmalen Randbereiche 12 erstreckt. Nach einer Feinbearbeitung dieser abgeschiedenen Zwischenschicht 10 in den beiden Randbereichen 12 können die beiden Randbereiche 12 als Laufflächen für die Laufrollen einer nicht gezeigten Abtasteinheit zur Abtastung der Teilung 2 dienen.

In Figur 3 ist eine zweite Maßverkörperung im Querschnitt gezeigt. Auf der Teilungsebene einer Teilungsmatrize 20 aus Glas mit einer Teilung 21 wird eine Elektrodenschicht 22 aufgebracht, die gleichzeitig als Trennschicht dient; diese Elektrodenschicht 22 kann z. B. aus Silber bestehen, das im Hochvakuum in einer Schichtdicke von etwa 50 - 100 nm aufgedampft wird.

Auf der Elektrodenschicht 22 der Teilungsmatrize 20 wird ein Teilungsträger 31 mit einer Teilung 32 in Form einer galvanischen Abformschicht erzeugt; vorteilhafte Materialen dieses Teilungsträgers 31 sind Kupfer und Nickel.

Sodann wird der Teilungsträger 31 mit der Teilung 32 mittels einer galvanisch abgeschiedenen Zwischenschicht 10 kraftschlüssig mit einem Grundkörper 3 verbunden, wie bei der ersten Maßverkörperung nach Figur 1 beschrieben; identische Teile in den Figuren 1 und 3 weisen die gleichen Bezugszeichen auf. Anschließend wird die Teilungsmatrize 20 mit der Elektrodenschicht 22 als Trennschicht abgezogen und kann für die Herstellung weiterer Teilungsträger 31 verwendet werden.

Diese zweite Maßverkörperung, bestehend aus dem Teilungsträger 31 aus Kupfer oder Nickel und aus dem Grundkörper 3 aus Stahl, besitzt wegen des gegenüber dem Teilungsträger 31 größeren Flächenträgheitsmomentes des Grundkörpers 3 als resultierenden thermischen Ausdehnungskoeffizienten den thermischen Ausdehnungskoeffizienten des Grundkörpers 3 aus Stahl; bei der Verbindung dieser zweiten Maßverkörperung an einem Maschinenteil aus Stahl treten wegen der gleichen thermischen Längenänderungen der zweiten Maßverkörperung und des Maschinenteils keine temperaturbedingten Meßungenauigkeiten auf.

EP 0 401 536 B1

## Patentansprüche

1. Maßverkörperung, die aus einem Grundkörper und aus einem darauf angebrachten Teilungsträger mit einer Teilung besteht, wobei der Grundkörper und der Teilungsträger unterschiedliche thermische Ausdehnungskoeffizienten aufweisen, dadurch gekennzeichnet, daß der Teilungsträger (1, 31) mit dem Grundkörper (3) durch eine galvanisch abgeschiedene Zwischenschicht (10) kraftschlüssig verbunden ist.

2. Maßverkörperung nach Anspruch 1, dadurch gekennzeichnet, daß der Teilungsträger (1) aus Glas besteht.

3. Maßverkörperung nach Anspruch 1, dadurch gekennzeichnet, daß der Teilungsträger (31) aus Metall als galvanische Abformschicht von einer Teilungsmatrize (20) gebildet ist.

4. Maßverkörperung nach Anspruch 3, dadurch gekennzeichnet, daß der Teilungsträger (31) aus Kupfer oder Nickel besteht.

5. Maßverkörperung nach Anspruch 1, dadurch gekennzeichnet, daß der Grundkörper (3) aus Stahl besteht.

6. Maßverkörperung nach Anspruch 1, dadurch gekennzeichnet, daß die galvanisch abgeschiedene Zwischenschicht (10) aus Kupfer oder Nickel besteht.

7. Maßverkörperung nach Anspruch 1, dadurch gekennzeichnet, daß der Grundkörper (3) einen U-förmigen Querschnitt aufweist.

8. Maßverkörperung nach Anspruch 1, dadurch gekennzeichnet, daß aus den unterschiedlichen thermischen Ausdehnungskoeffizienten des Teilungsträgers (1, 31) und des Grundkörpers (3) durch Bemessung ihrer Flächenträgheitsmomente ein resultierender thermischer Ausdehungskoeffizient erzielbar ist.

9. Verfahren zur Herstellung einer Maßverkörperung nach Anspruch 1, gekennzeichnet durch folgende Verfahrensschritte:

a) der Teilungsträger (1) wird an seiner Unterseite mit einer elektrisch leitenden Elektrodenschicht (5) versehen;

b) die mit der Elektrodenschicht (5) versehene Unterseite des Teilungsträgers (1) wird auf dem Grundkörper (3) fixiert;

c) der Teilungsträger (1) wird mit dem Grundkörper (3) mittels der galvanisch abgeschiedenen Zwischenschicht (10) kraftschlüssig verbunden.

10. Verfahren zur Herstellung einer Maßverkörperung nach Anspruch 1, gekennzeichnet durch folgende Verfahrensschritte:

a) Auf der Teilungsebene einer Teilungsmatrize (20) mit einer Teilung (21) wird eine Elektrodenschicht (22) als Trennschicht aufgebracht;

b) auf der Elektrodenschicht (22) der Teilungsmatrize (20) wird der Teilungsträger (31) mit der Teilung (32) als galvanische Abformschicht erzeugt;

c) die der Teilung (32) abgewandte Unterseite des Teilungsträgers (31) wird auf dem Grundkörper (3) fixiert;

d) der Teilungsträger (31) wird mit dem Grundkörper (3) mittels der galvanisch abgeschiedenen Zwischenschicht (10) kraftschlüssig verbunden;

e) die Teilungsmatrize (20) wird mitsamt der Elektrodenschicht (22) als Trennschicht vom Teilungsträger (31) abgezogen.

11. Maßverkörperung nach Anspruch 8, dadurch gekennzeichnet, daß ein Bereich (12) der Zwischenschicht (10) als Lauffläche für die Laufrollen einer Abtasteinheit zur Abtastung der Teilung (2) des Teilungsträgers (1) dient.

## Claims

1. Measurement embodiment consisting of a base body and a carrier mounted thereon and bearing a scale, the base body and the scale carrier having different coefficients of thermal expansion, characterised in that the scale carrier (1, 31) is connected non-positively to the base body (3) by an electrodeposited intermediate coating (10).

2. Measurement embodiment according to claim 1, characterised in that the scale carrier (1) consists of glass.

3. Measurement embodiment according to claim 1, characterised in that the scale carrier (31) is formed from metal by a master scale negative (20) as an electrodeposited copy coating.

4. Measurement embodiment according to claim 1, characterised in that the scale carrier (31) consists of copper or nickel.

4

5. Measurement embodiment according to claim 1, characterised in that the base body (3) consists of steel.

6. Measurement embodiment according to claim 1, characterised in that the electrodeposited intermediate coating (10) consists of copper or nickel.

7. Measurement embodiment according to claim 1, characterised in that the base body (3) has a U-shaped cross-section.

8. Measurement embodiment according to claim 1, characterised in that a resultant coefficient of thermal expansion can be obtained from the different coefficients of thermal expansion of the scale carrier (1, 31) and the base body (3) by apportioning their surface moments of inertia.

9. Process for producing a measurement embodiment according to claim 1, characterised by the following steps:

a) the scale carrier (1) is provided with an electrically conductive electrode coating (5) on its underside;

b) the underside of the scale carrier (1) provided with the electrode coating (5) is fixed on the base body (3);

c) the scale carrier (1) is connected non-positively to the base body (3) by means of the electrodeposited intermediate coating (10).

10. Process for producing a measurement embodiment according to claim 1, characterised by the following steps:

a) an electrode coating (22) is applied as a separating coating to the plane of division of a master scale negative (20) with a scale (21);

b) the scale carrier (31) with the scale (32) is produced as an electrodeposited copy coating on the electrode coating (22) of the master scale negative (20);

c) the underside of the scale carrier (31) facing away from the scale (32) is fixed to the base body (3);

d) the scale carrier (31) is connected non-positively to the base body (3) by means of the electrodeposited intermediate coating (10);

e) the master scale negative (20) is removed from the scale carrier (31) together with the electrode coating (22) as separating coating.

11. Measurement embodiment according to claim 8, characterised in that a zone (12) of the intermediate coating (10) serves as a rolling surface for the running rollers of a scanning unit for scanning the scale (2) of the scale carrier (1).

## Revendications

1. Mesure matérialisée constituée d'un élément de base et d'un support de graduation muni d'une graduation monté sur celui-ci, l'élément de base et le support de graduation ayant des coefficients de dilatation thermique différents, caractérisé par le fait que le support de graduation (1, 31) est lié par adhérence à l'élément de base (3) au moyen d'une couche intermédiaire (10) déposée par électrolyse.

2. Mesure matérialisée selon la revendication 1, caractérisée par le fait que le support de graduation (1) est en verre.

3. Mesure matérialisée selon la revendication 1, caractérisée par le fait que le support de graduation (31) en métal se présente sous la forme d'une pellicule empreinte d'une matrice de graduation (20) obtenue par électrolyse.

4. Mesure matérialisée selon la revendication 3, caractérisée par le fait que le support de graduation (31) est en cuivre ou en nickel.

5. Mesure matérialisée selon la revendication 1, caractérisée par le fait que l'élément de base (3) est en acier.

6. Mesure matérialisée selon la revendication 1, caractérisée par le fait que la couche intermédiaire (10) déposée par électrolyse est en cuivre ou en nickel.

7. Mesure matérialisée selon la revendication 1, caractérisée par le fait que l'élément de base (3) a une section en forme de U.

8. Mesure matérialisée selon la revendication 1, caractérisée par le fait que l'on obtient, à partir des coefficients de dilatation thermique différents du support de graduation (1, 31) et de l'élément de base (3), un coefficient de dilatation thermique résultant par adaptation des moments d'inertie géométrique.

9. Procédé de fabrication d'une mesure matérialisée selon la revendication 1, caractérisé par les étapes suivantes:

a) on applique une couche-électrode (5) électriquement conductrice sur la face inférieure du support de graduation (1);

b) on fixe la face inférieure du support de graduation (1) munie de la couche-électrode (5) sur l'élément de base (3);

c) on relie par adhérence le support de graduation (1) à l'élément de base (3) à l'aide de la couche intermédiaire (10) déposée par électrolyse.

10. Procédé de fabrication d'une mesure matérialisée selon la revendication 1, caractérisé par les étapes suivantes:

a) on applique sur le plan de graduation d'une matrice (20) portant une graduation (21) une couche-électrode (22) formant couche de séparation;

b) on réalise, sur la couche-électrode (22) de la matrice de graduation (20), le support de graduation (31) avec sa graduation (32) sous la forme d'une pellicule-empreinte;

c) on fixe la face inférieure du support de graduation (31) opposée à la graduation (32) sur l'élément de base (3);

d) on lie par adhérence le support de graduation (31) et l'élément de base (3) à l'aide de la couche intermédiaire (10) déposée par électrolyse;

e) on retire du support de graduation (31) la matrice de graduation (20) avec la couche-éléctrode (22) formant couche de séparation;

11. Mesure matérialisée selon la revendication 8, caractérisée par le fait qu'une zone (12) de la couche intermédiaire (10) sert de surface de roulement pour les galets d'une unité de lecture qui lit la graduation (2) du support de graduation (1).

*Fig. 1*

*Fig. 2*

*Fig. 3*